Europäisches Patentamt

European Patent Office

Office européen des brevets

(19)

(11) Veröffentlichungsnummer: **0 504 764 B1**

(12) **EUROPÄISCHE PATENTSCHRIFT**

(45) Veröffentlichungstag der Patentschrift: **01.03.95**

(51) Int. Cl.6: **C01F 7/56**

(21) Anmeldenummer: **92104437.6**

(22) Anmeldetag: **14.03.92**

(54) **Verfahren zur Erhöhung des molaren Aluminium/Chlor-Verhältnisses in Polyaluminiumchloridlösungen.**

(30) Priorität: **20.03.91 DE 4108972**

(43) Veröffentlichungstag der Anmeldung:
**23.09.92 Patentblatt 92/39**

(45) Bekanntmachung des Hinweises auf die Patenterteilung:
**01.03.95 Patentblatt 95/09**

(84) Benannte Vertragsstaaten:
**AT BE CH DE DK ES FR GB GR IT LI LU MC NL PT SE**

(56) Entgegenhaltungen:
**DE-C- 2 309 610
FR-A- 2 384 861
US-A- 3 240 687
US-A- 3 767 549
US-A- 4 053 570**

(73) Patentinhaber: **A.I.R. Lippewerk Recycling GmbH
Brunnenstrasse 138
D-44536 Lünen (DE)**

(72) Erfinder: **Kudermann, Gerhard, Dr.
Henri-Spaak-Strasse 19
W-5305 Alfter (DE)**
Erfinder: **Blaufuss, Karl-Heinz
Günterscheider-Strasse 8
W-5469 Windhagen (DE)**

(74) Vertreter: **Müller-Wolff, Thomas
HARWARDT NEUMANN,
Patent- und Rechtsanwälte,
Postfach 14 55
D-53704 Siegburg (DE)**

EP 0 504 764 B1

**Beschreibung**

Die Erfindung betrifft ein Verfahren zur Erhöhung des molaren Al/Cl-Verhältnisses in Polyaluminiumchlorid-Lösungen durch elektrochemisches Zulösen von Aluminium bei Temperaturen von 50 bis 120 °C.

Aus der DE 27 13 236 ist die Elektrolyse der Aluminiumchloridlösungen bei 50 bis 120 °C unter Abscheidung von Chlor zur Herstellung von Polyaluminiumchlorid-Lösungen beschrieben.

Weiterhin ist in DE 23 09 610 die Elektrolyse der PAC-Lösungen zwischen zwei Aluminiumelektroden zur Erhöhung des molaren Aluminium/Chlor-Verhältnisses beschrieben.

Für beide Verfahren ist eine speziell dafür hergerichtete Elektrolysezelle erforderlich, wobei die für die Chlorabscheidung benötigten Einrichtungen hinsichtlich Umweltschutz und Arbeitssicherheit besonders hohen Anforderungen genügen müssen.

Neben den dabei anfallenden Stromkosten ist ferner zu berücksichtigen, daß bei den bekannten Verfahren auch der Wertstoff Chlor verloren geht. Falls dies vermieden werden soll, müssen aufwendige Anlagen zur Rezyklierung installiert werden.

Aufgabe der vorliegenden Erfindung ist es, die beschriebenen Nachteile zu vermeiden und ein großtechnisch einsetzbares, umweltfreundliches und kostengünstiges Verfahren zu entwickeln, das mit gerätetechnisch einfachen Mitteln durchführbar ist.

Die Aufgabe wird erfindungsgemäß durch die in den Patentansprüchen angegebenen Merkmale gelöst. Durch das galvanische Zulösen von Aluminium kann auf die Verwendung eines Fremdstromes verzichtet werden, wobei die konstruktive Gestaltung des galvanischen Elementes es erlaubt, mit geringsten Mengen des edleren Metalls auszukommen. Dies kann z.B. dadurch geschehen, daß ein platinierter Drahtkorb verwendet wird, in dem das aufzulösende Aluminium in engem Kontakt mit dem edleren Metall gehalten wird. Anstelle von Platin kann auch Kupfer, Gold oder Silber verwendet werden.

Die edlere Komponente des galvanischen Elements kann auch in Form von Salzen, z.B. Platinchlorid, Goldchlorid, Kupferchlorid oder Quecksilberchlorid zugegeben werden. Die Metallionen werden sofort reduziert und schlagen sich an der Oberfläche des Aluminiums nieder und bilden galvanische Elemente.

Für die kosmetische Industrie ist es erforderlich, daß der pH-Wert der Aluminium/Chlorid-Lösung annähernd neutral ist und das molare Verhältnis von etwa 2 erreicht wird. Dieses erfolgt bei der Verwendung von Quecksilber am schnellsten, wobei durch die schonende galvanische Umsetzung im Temperaturbereich von 40 bis 80 °C der Quecksilbergehalt der Lösung unter 0,1 $\mu$g/l liegt. Cu-haltige Aluminiumqualitäten können direkt als galvanisches Element eingesetzt werden.

Bei der Verwendung von edlerem Metall in flüssigem Zustand, wie z.B. Quecksilber, kann mit Erfolg bei steigendem pH-Wert die Auflösung von Aluminium beschleunigt werden. Damit können Aluminiumgehalte in der Lösung von mehr als 122 g/l erzielt werden.

Mit steigenden pH-Werten und steigenden Aluminiumgehalten scheiden sich beim anodischen Zulösen von Aluminium mit einer Fremdspannung an der Kathode oxidische Aluminiumverbindungen (vermutlich Aluminiumhydroxid) ab, die zu einer Unterbrechung des Stromflusses führen. Nach unseren Beobachtungen treten diese Abscheidungen auf bereits bei Spannungen oberhalb 2 V, die für eine brauchbare Lösungsgeschwindigkeit der Aluminiumanode mindestens erforderlich sind, und bei pH-Werten der Lösung oberhalb 2,9 sowie Aluminiumgehalten oberhalb 90 g/l. Es sind somit nur durch besondere Maßnahmen, wie z.B. ständiges Reinigen der Kathode Aluminiumgehalte bis 122 g/l erreichbar.

Im folgenden wird die Erfindung anhand mehrerer Ausführungsbeispiele und eines Vergleichsbeispiels näher erläutert.

Beispielserie 1

Als Ausgangslösung wurde eine Polyaluminiumchloridlösung verwendet, die hergestellt wurde aus einer Restlösung, die beim Ätzen von Aluminiumfolien, z. B. bei der Herstellung von Kondensatorfolien, anfällt. Die Zusammensetzung der Ausgangslösung ergibt sich aus Tabelle 1.

EP 0 504 764 B1

Tab. 1

| Analyse der Ausgangslösung | | |
|---|---|---|
| Al | 30 | g/l |
| Cl | 80 | g/l |
| Molverhältnis (MV) | 0,5 | |
| Verunreinigungen | | |
| Mn | 0,08 | g/l |
| Ca | 0,02 | g/l |
| Mg | 0,006 | g/l |
| Si | 0,01 | g/l |
| Fe | 0,003 | g/l |
| Cu, Ti | 0,0005 | g/l |
| Na | 0,007 | g/l |
| Rest einzeln | <0,001 g/l | |

Die Verfahrensparamenter beim Zulösen von Aluminium sind aus der beigefügten Tabelle 2 ersichtlich. Der Wasserverlust während des Lösens durch Verdampfen wurde ständig ersetzt. Als Ergebnis wurden Polyaluminiumchlorid-Lösungen mit den in Tabelle 2 aufgeführten Zusammensetzungen sowie den in Tabelle 1 vorgegebenen Verunreinigungen erhalten.

Tab. 2

| Zulösen von Aluminium bei Temperatur 80 °C | | | | | | | |
|---|---|---|---|---|---|---|---|
| Nr. | Zeit h | Methode | Al zugelöst g/l | pH | $Al_{ges}$ g/l | Cl g/l | MV Al/Cl |
| 1 | 0,25 | Hg galv. | 4,5 | 0 | 34,5 | 80 | 0,57 |
| 2 | 3,5 | " | 92 | 3,8 | 122 | 80 | 2,00 |
| 3 | 4 | " | 114 | | 144 | 80 | 2,36 |
| 4 | 0,5 | Al mit 50 ppm Cu | 4,5 | 0 | 34,5 | 80 | 0,57 |
| 5 | 36 | " | 92 | 3,8 | 122 | 80 | 2,00 |
| 6 | 18 | Al mit 200 ppm Cu | | | | | |
| 7 | 9 | Al mit 0,5 % Cu | 92 | 3,8 | 122 | 80 | 2,00 |
| 8 | 120 | Cu galv. | 92 | 3,8 | 122 | 80 | 2,00 |
| 9 | 120 | Pt galv. | 92 | 3,8 | 122 | 80 | 2,00 |
| 10 | 120 | Au galv. | 92 | 3,8 | 122 | 80 | 2,00 |
| 11 | 120 | Ag galv. | 92 | 3,8 | 122 | 80 | 2,00 |

Tab. 3

| Vergleichsversuche | | | | | | |
|---|---|---|---|---|---|---|
| Zeit h | Methode | Al zugelöst g/l | pH | $Al_{ges}$ g/l | Cl g/l | MV Al/Cl |
| 0,5 | anodisch | 4,5 | 0 | 34,5 | 80 | 0,57 |
| 24 | " | 92 | 3,8 | 122 | 80 | 2,00 |

Die Gehalte der edleren Komponente des galvanischen Elements in der Produktlösung wurden wie folgt bestimmt:

3

| Element | mg/l |
|---------|------|
| Cu | 0,5 (entsprechend der Ausgangslösung) |
| Pt | <0,01 |
| Au | <0,01 |
| Ag | <0,01 |
| Hg | <0,0001 |

Alle hier beschriebenen Versuche wurden in Glasbechern durchgeführt, die über eine Heizplatte erwärmt wurden.

Bei der elektrochemischen Reaktion nach dem erfindungsgemäßen Verfahren steht das unedlere Aluminium in metallischem Kontakt mit einem edleren Metall in einer wäßrigen Polyaluminiumchloridlösung. Auf diese Weise wird ein galvanisches Element gebildet. Das unedlere Aluminium geht in Lösung, gleichzeitig wird am edleren Element Wasserstoff abgeschieden. Die Auflösung von 92 g Aluminium pro Liter entspricht theoretisch einem Stromfluß von 268 Ah und bei vollständigem Lösen in 3,5 Stunden einer Wasserstoffentwicklung von 16 ml Wasserstoff pro Sekunde. Es ist klar, daß hierfür die entsprechenden Kontaktflächen zwischen den beiden Komponenten des galvanischen Elements für die Stromübergänge und am edleren Element die entsprechenden Flächen für die Wasserstoffreduktion und Wasserstoffabscheidung vorhanden sein müssen. Daneben müssen entsprechende freie Aluminiumflächen vorliegen, die eine Auflösung des Aluminiums gestatten.

In den Beispielen 8 - 11 gemäß Tabelle 2 wurden hierzu Drahtkörbe verwendet, die jeweils mit dem edleren Metall, wie z. B. Cu, Pt, An oder Ag, beschichtet waren. Die Drahtkörbe sollten dabei einen möglichst geschlossenen Boden aufweisen, um ein Durchfallen des eingefüllten Materials zu vermeiden. Die Drahtkörbe wurden gefüllt mit Aluminium, vorzugsweise Reinaluminium, z. B. in Form von Spänen, Folien, Stücken, Granalien, Schrott oder Halbzeugresten. Je nach Beschaffenheit des aufgegebenen Aluminiums kann es zur Gewährleistung eines ausreichenden Kontaktes zwischen dem Aluminium und dem edleren Metall notwendig sein, das Aufgabegut zumindest teilweise mit einem Gewicht zu beschweren. In diesem Fall werden vorzugsweise Gewichte aus inertem Material oder aus Aluminium verwendet.

Anstelle der Drahtkörbe können auch Platten oder Bleche aus dem edleren Metall auf dem Boden des Reaktionsgefäßes ausgelegt werden. Zudem können auch das gesamte Reaktionsgefäß oder einzelne Teile davon aus dem edleren Metall angefertigt sein.

Beim Einsatz von Aluminiumlegierungen wird das Aufgabegut ohne weiteren metallischen Kontakt in die Lösung eingebracht. Das edlere Element ist hier als Legierungselement, wie z. B. Cu, bereits vorhanden (siehe Beispiele 4 bis 7).

Besonders günstige Auflösebedingungen werden erreicht, wenn anstelle fester Metalle, flüssige Metalle, wie z. B. Quecksilber, als edlere Komponente verwendet werden (siehe Beispiel 1 bis 3). Hier wurde der Boden des Reaktionsgefäßes mit Quecksilber bedeckt. In das flüssige Metall wird das aufgegebene Aluminium getaucht. In diesem Fall ergeben sich deutlich kürzere Lösezeiten (s. Tabelle 2).

Die zugegebene Menge an Aluminium wurde in allen Fällen so gewählt, daß das Aluminium immer in einem Überschuß bezogen auf die Lösungsmenge vorlag.

Die Vergleichsversuche gemäß Tabelle 3 wurden als Elektrolyse mit der gleichen Ausgangslösung durchgeführt. In die Lösung tauchte ein als Anode geschaltetes Stück Aluminium. Als Kathode wurde in diesem Fall ein Platinnetz verwendet. An die Elektroden wurde eine externe Spannung angelegt, so daß unter Stromfluß die Elektrolysereaktion in Gang gesetzt wurde. An der Anode wurde das Al aufgelöst, gleichzeitig wurde an der Kathode Wasserstoff abgeschieden. Bei diesem anodischen Zulösen von Aluminium konnte das angegebene Molverhältnis bzw. der angegebene Aluminiumgehalt nur durch periodisches Ablösen der Abscheidungen erreicht werden (siehe Vergleichsversuche Tabelle 3 und Seite 2, letzter Absatz).

**Beispielserie 2**

Aus Salzsäure und Reinaluminium wurde eine Polyaluminiumchlorid-Ausgangslösung der folgenden Zusammensetzung hergestellt:

Al : 52 /l

Cl : 111 g/l

Molverhältnis Al/Cl = 0,6.

Jeweils 100 ml dieser Ausgangslösung wurden in Rundkolben gegeben, die mit Rückflußkühlern versehen waren.

4

In den Beispielen 12, 14, 16, 18 und 19 wurde das galvanische Element gebildet aus einer Aluminiumlegierung mit mindestens einem Legierungselement, das edler ist als Aluminium (Cu, Fe). In den Beispielen 13, 15 und 17 wurden der Ausgangslösung Reinaluminium und $CuCl_2$ zugesetzt. Das Kupfer zementiert auf dem Aluminiummetall als Kupferschwamm, wodurch das gewünschte galvanische Element gebildet wird.

Im Beispiel 20 wurde ein Cu-Blech auf den Boden des Reaktionsgefäßes gelegt und darauf Reinaluminium aufgebracht. Zusätzlich wurden in das Aluminium Cu-Streifen gesteckt.

Die Reaktionsgefäße wurden dann in einem Wasserbad bis zu etwa 70 h zwischen 65 und 80 °C gehalten. Anschließend wurden die Lösungen abfiltriert und analysiert. Die Ergebnisse sind in Tabelle 4 zusammengefaßt. Durch die Rückflußkühler wurden Lösungsverluste weitestgehend vermieden. Die Hydrolyse des Metalls führte allerdings zu einem gewissen Wasserverbrauch und dementsprechend zu höheren Chloridgehalten in den Produktlösungen als in der Ausgangslösung.

Tabelle 4:

Ausgangslösung: Al 52 g/l, Cl 111 g/l, jeweils 100 ml
Einsatzstoffe: 12 g Al verschiedener Zusammensetzung sowie ggf. Cu-Salze bzw. metallisches Cu
Lösungstemperatur: 65 bis 80 °C

| Nr. | Einsatzstoff | Lösezeit | pH | Al | Fe | Cl | Cu | MV |
|---|---|---|---|---|---|---|---|---|
| 12 | Al-Legierung mit 0,00048 % Cu u. 0,84 % Fe | 19 | 3,5 | 185,1 | 0,53 | 123 | <2 | 1,98 |
| 13 | Al 99,9 + 0,15 % Cu (Zugabe als $CuCl_2$) | 70 | 3,5 | 180 | 0,056 | 122 | 2 | 1,94 |
| 14 | Al-Legierung mit 0,01 % Cu | 70 | 3,2 | 143,3 | 0,055 | 119 | 3 | 1,58 |
| 15 | Al-99,9 + 0,05 % Cu (Zugabe als $CuCl_2$) | 70 | 3,5 | 176 | 0,055 | 120 | <2 | 1,93 |
| 16 | Al-Legierung mit 0,02 % Cu u. 0,27 % Fe | 70 | 3,5 | 179,4 | 0,38 | 120 | 15 | 1,96 |
| 17 | Al 99,9 + 0,005 % Cu (Zugabe als $CuCl_2$) | 70 | 3,5 | 178 | 0,061 | 122 | 14 | 1,92 |
| 18 | Al-Legierung mit 0,2 % Cu u. 0,27 % Fe | 70 | 3,5 | 191,5 | 0,32 | 122 | 40 | 2,06 |
| 19 | Hütten-Al mit 1,5 % Fe | 5 | 3,7 | 182,2 | 0,52 | 127,6 | - | 1,87 |
| 20 | Al 99,9 + 6,2 g Cu-Blech u. Cu-Streifen | 70 | 3,5 | 175,7 | 0,026 | 121 | <2 | 1,91 |

Es zeigte sich, daß bereits Eisen, das edler ist als Aluminium, eine Beschleunigung der Lösegeschwindigkeit auch bei pH-Werten über 3 bewirkt. Bei der Reaktion handelt es sich vorwiegend um eine Katalyse durch das Redox-System Fe (II)/Fe (III). Das Eisen kann dabei entweder als Legierungselement oder auch als gelöstes Eisensalz eingesetzt werden. Bei Eisengehalten oberhalb von ca. 0,8 % in einer Aluminiumlegierung steigt die Lösegeschwindigkeit für Al stark an. Allerdings nehmen die Produktlösungen dann Eisengehalte von bis zu etwa 0,5 g/l auf (Beispiele 12 und 19). Überschüssiges Eisen fiel als Eisenhydroxid aus und konnte abfiltriert werden. Bei den vorliegenden pH-Werten zwischen 3,5 und 3,7 müßte das gelöste Eisen ebenfalls als Eisenhydroxid ausfallen. Es blieb jedoch auch nach Oxidation mit $H_2O_2$ in Lösung (die Lösung wird gelb). Es wird deshalb angenommen, daß das Eisen wie das Aluminium als Polychlorid vorliegt.

Auch Kupfer, eingesetzt als Legierungsbestandteil, als Salz (z. B. $CuCl_2$) oder als metallischer Werkstoff in direktem Kontakt mit dem Aluminium, bewirkt eine hohe Auflösungsgeschwindigkeit des Aluminiums. Dabei zeigen äußerst geringe Cu-Mengen von ca. 0,005 % Cu, zugegeben als $CuCl_2$ (siehe Beispiel 17), bessere Ergebnisse als Cu-Gehalte in einer Al-Legierung von etwa 0,01 % Cu (siehe Beispiel 14). Auch die Auskleidung des Bodens des Reaktionsgefäßes mit Kupferblech sowie das Einbringen weiterer Kupferblechstreifen zwischen die aufgegebenen Aluminiumspäne bewirkt eine hohe Lösegeschwindigkeit (siehe Beispiel 20). Bei keinem der Versuche wurde ein wesentlicher Anstieg der Kupfergehalte in der Produktlösung beobachtet.

Der pH-Wert der Produktlösungen wird u. a. wesentlich durch die Salzkonzentration beeinflußt. Bei der industriellen Anwendung des erfindungsgemäßen Verfahrens kann die pH-Wert-Messung zur Prozeßsteuerung eingesetzt werden.

Für die Praxis könnte der Einsatz von eisenhaltigem Aluminium von Vorteil sein, wenn damit eine Polyaluminiumchlorid-Lösung für die Wasserreinigung hergestellt werden soll. Eisen verbessert u. U. das Flockungs- und Absetzverhalten des Niederschlags. Für weitere Anwendungen der Polyaluminiumchlorid-Lösungen wie z. B. in der Kosmetik wird der Einsatz von Lösebehältern mit Kupferboden (Blech) und/oder die Zugabe des Aluminiums mit einem Kupferdrahtkorb empfohlen. Kupfersalze können evtl. zusätzlich zur Beschleunigung der Reaktion eingesetzt werden.

**Patentansprüche**

1.  Verfahren zur Erhöhung des molaren Al/Cl-Verhältnisses in Polyaluminiumchlorid-Lösungen durch elektrochemisches Zulösen von Aluminium bei Temperaturen von 50 bis 120 °C, dadurch gekennzeichnet, daß eine Polyaluminiumchlorid-Lösung mit einem molaren Al/Cl-Verhältnis von ≥ 0,5 mit einem galvanischen Element, das aus metallischem Aluminium und einem elektrochemisch edleren Metall besteht, in Kontakt gebracht und so lange gehalten wird, bis eine Sättigung der Lösung mit Aluminium erreicht ist.

2.  Verfahren nach Anspruch 1, dadurch gekennzeichnet, daß als galvanisches Element eine Aluminiumqualität verwendet wird, die mindestens ein weiteres Metall enthält, das elektrochemisch edler ist als Aluminium und an der Aluminiumoberfläche Kontakt zur Lösung hat.

3.  Verfahren nach einem der vorhergehenden Ansprüche, dadurch gekennzeichnet, daß das elektrochemisch edlere Metall ausgewählt ist aus der Gruppe Quecksilber, Kupfer, Gold, Silber oder Platin.

4.  Verfahren nach einem der vorhergehenden Ansprüche, dadurch gekennzeichnet, daß als Ausgangslösungen basische Aluminiumchloridlösungen der allgemeinen Zusammensetzung $Al_2(OH)_n Cl_{6-n}$, $2 ≤ n ≤ 5$ verwendet werden.

5.  Verfahren nach einem der vorhergehenden Ansprüche, dadurch gekennzeichnet, daß als edleres Element ein unter den Lösebedingungen flüssiges Metall verwendet wird.

6.  Verfahren nach einem der vorhergehenden Ansprüche, dadurch gekennzeichnet, daß die edlere Komponente des galvanischen Elements in Form von Salzen der Lösung zugegeben wird.

**Claims**

1.  A process for increasing the molar Al/Cl ratio in polyaluminium chloride solutions by electro-chemically adding aluminium at temperatures of 50 to 120 °C, characterised in
    that a polyaluminion chloride solution with a molar Al/Cl ratio of ≥ 0.5 is brought into contact with an electroplated element consisting of metallic aluminium and an electro-chemically more precious metal, and held until the solution is saturated with aluminium.

2.  A process according to claim 1,
    characterised in
    that the electroplated element consists of an aluminium grade containing at least one further metal which, electro-chemically, is more precious than aluminium and which, at the aluminium surface, is in contact with the solution.

3.  A process according to any one of the preceding claims, characterised in
    that the electro-chemically more precious metal is selected from a group of mercury, copper, gold, silver or platinum.

4.  A process according to any one of the preceding claims, characterised in
    that the starting solutions are alkaline aluminium chloride solutions of the general composition of $Al_2(OH)_n Cl_{6-n}$, $2 \leqq n \leqq 5$.

5.  A process according to any one of the preceding claims, characterised in
    that a metal which is liquid under the solution conditions is used as the more precious element.

6.  A process according to any one of the preceding claims, characterised in
    that the more precious component of the electroplated element is added to the solution in the form of salts.

**Revendications**

1.  Procédé pour augmenter le rapport moléculaire Al/Cl dans des solutions de chlorure d'aluminium basique par dissolution électrochimique d'aluminium à des températures comprises entre 50 et 120°C, caractérisé par le fait que l'on met en contact une solution de chlorure d'aluminium basique dont le rapport moléculaire Al/Cl est supérieur ou égal à 0,5 avec un couple galvanique qui est constitué par de l'aluminium métal et par un métal plus électropositif, et que l'on maintient le contact jusqu'à ce que l'on ait obtenu une solution saturée en aluminium.

2.  Procédé selon la revendication 1, caractérisé par le fait que l'on utilise comme couple galvanique une qualité d'aluminium contenant au moins un autre métal qui est plus électropositif que l'aluminium et qui est en contact avec la solution à la surface de l'aluminium.

3.  Procédé selon l'une des revendications précédentes, caractérisé par le fait que le métal plus électropositif est choisi dans le groupe qui comprend le mercure, le cuivre, l'or, l'argent et le platine.

4.  Procédé selon l'une des revendications précédentes, caractérisé par le fait que l'on utilise comme solutions de départ des solutions de chlorure d'aluminium basique dont la formule générale est $Al_2(OH)_n Cl_{6-n}$, avec $2 \leqq n \leqq 5$.

5.  Procédé selon l'une des revendications précédentes, caractérisé par le fait que l'on utilise comme métal plus électropositif un métal qui est liquide dans les conditions de la dissolution.

6.  Procédé selon l'une des revendications précédentes, caractérisé par le fait que le constituant plus électropositif du couple galvanique est ajouté à la solution sous la forme de sels.